# EUROPEAN PATENT SPECIFICATION

(11) **EP 2 441 795 B1**
(45) Date of publication and mention of the grant of the patent: **15.07.2020**
(21) Application number: 11185018.6
(22) Date of filing: 13.10.2011
(51) Int. Cl.: C08L 77/02, C08K 3/04, C08K 5/00, C08L 23/06, C08K 3/016

(54) **Thermoplastic injection moulding material and injection moulded thermoplastic object**
Thermoplastisches Spritzgussmaterial und spritzgussgeformtes thermoplastisches Objekt
Matériau de moulage par injection thermoplastique et objet thermoplastique moulé par injection

(30) Priority: 13.10.2010 DK 201070435
(43) Date of publication of application: 18.04.2012
(73) Proprietor: Ammeraal Beltech Modular A/S, 7100 Vejle (DK)
(72) Inventor: Bolvig Nielsen Faerk, Line, 7130 Juelsminde (DK); Vestergaard Jensen, Stig, 7100 Vejle (DK)
(74) Representative: Tellefsen, Jens J.

(56) References cited:
- EP-A1- 2 157 035
- EP-A2- 2 165 948
- "Standard Test Method for D-C Resistance or Conductance of Moderately Conductive Materials", ASTM D4496-87(199,, 1 January 1998 (1998-01-01), pages 371-375, XP009140122,

## Description

### Field of the Invention

The present invention relates to a novel thermoplastic injection moulding material as well as an injection moulded thermoplastic object moulded from such a material

The material is particular in that it exhibits characteristics which appear to be contradictory in that it is electrically conductive, fire-retardant and at the same time has a relatively high strength compared to an unmodified base material.

### Background of the Invention

In the art it is well-known to provide materials either with additives such that they become electrically conductive or alternatively with additives such that they become flame-retardant.

These additives usually decrease the strength and the surface toughness and cause other undesired effects whereby these materials have found very limited use.

One such example providing flame resistance is disclosed in US2004/0006168 where a substantial content of red phosphorous is used to render the composition flame retardant. However, for other properties such as mechanical strength and electrical conductivity, and also flowability during injection moulding, the material according to US2004/0006168 is inadequate and for many applications not suited.

There is, however, a need for a material which exhibits a high strength and at the same time is both conductive and fire retardant in that in many applications the working environment is such that it is desirable to provide electrically conductive objects, for example when the injection moulding material is used for endless belts it is desirable to be able to discharge any, for example static, electricity in the belt before it is discharged through a worker and at the same time when working with welding robots or other spark generating tools adjacent objects made from for example polyamide, it is necessary to add an additive to the polyamide base material in order to render it flame-retardant. Polyamide, also known as POM, is relatively easy to ignite and burns well, although giving obnoxious gases and the like.
In EP 2 157 035 is described a modular belt link, where in a side surface a conductive insert is embedded, such that the inserts is present as a small part of both the top surface and the bottom surface of the belt link. In this manner if an electrically charged item or person comes into contact with the conductive insert, the electrical charged may be discharged through the insert to appropriate means provided in a sub-structure.

### Object of the Invention

The invention therefore addresses this need by providing a thermoplastic injection moulding material, which material is electrically conductive, fire-retardant and having a high tensile strength, characterised in that the material consists of:
- 45-85 % by weight of Polyamide 6:
- 5-25 % by weight of a conductive agent;
- 5-25 % by weight of a flame retardant;
- 3-15 % by weight of an impact modifier
- 0-4 % by weight of other additives

### Description of the Invention

One of the impressive characteristics of this material is that it retains approximately 70% or more of the strength of a "clean" POM-material such that a substantial part of the good strength characteristics of the POM-material is maintained. This is important, especially in applications where the thermoplastic injection moulding material is used for manufacturing modular belt links as will be further explained below in that in addition to the properties relating to electric conductivity and fire-retardance the strength is maintained such that in applications more or less the same physical dimensions of the objects may be used with the same resulting strength and thereby load characteristics as is already known from the use of POM-materials.

Particularly for endless belt applications the strength parameter is a very important parameter in that the tendency is to build larger and longer endless belts, for example in the vehicle manufacturing industry where both vehicle and personnel working on the assembly line are carried by the endless belt such that a substantial load needs to be transferred by each belt module. Furthermore, it is desirable to have electrically conducting work surfaces such that any build-up of static electricity may be discharged immediately. The static charge usually occurs as a result of movement between the object made from a thermoplastic material and other polymers, for example returning to the example with the endless conveyor belts electrostatic chargers may occurs as the belt moves along and sliding occurs for example against polyethylene sliding sheets which are used for packaging and transporting parts to be arranged on the vehicles and the like. Furthermore, personnel movements with plastic soles can cause static charges. An operator or worker being present in the vicinity of the belt and experiencing a static discharge will feel definitely uncomfortable or even suffer minor injury from such a discharge.

It is therefore increasingly becoming a requirement for these environments that thermoplastic injection moulding materials and particularly modular belt links made from such materials are provided with antistatic features either as in applicant's prior application as inlaid conductive elements which will be connected to the sub-carrying frame whereby any static electricity generated will be immediately discharged to the ground or as already known in the art by adding a conductive agent to the injection moulding material.

In addition to being strong and having conductive and fire-retardant properties it is also important that the surface has a certain toughness such that it will not get worn or otherwise damaged during normal use whereby a relatively long life expectancy may be foreseen. This is provided by adding an impact modifier such that the surface impact strength according to Izod Notch measurement method will be 6kJ/m².

As will be recognized by persons skilled in the art the inclusion of additives to a polymer based material such as for example POM is normally detrimental to the strength characteristics both with respect to tensile strength and tensile modulus, but with the present invention selecting the additives within the specified ranges it has been found that a thermoplastic injection moulding material having characteristics with respect to strength (both relating to tensile strength and tensile modulus) substantially as good as unmodified POM where the addition of the further characteristics, i.e. electrically conductive flame-retardant and high-impact resistance more than outweighs the relatively small loss in strength such that a superior product may be manufactured by the thermoplastic injection moulding material.

By the measurement according to the UL94-method the above mix having a flame-retardant content of 5-25% by weight justifies a classification as at least V1 and in a number of applications (depending on the thickness) also a V0 classification is achievable. For ordinary POM materials and related polymers used for thermoplastic injection moulding most materials have difficulties getting a rating and most materials will only get a V2 rating according to UL 94.

The inventor has therefore successfully developed a material which has superior characteristics on a number of important aspects such as tensile strength, tensile modules, Izod Notch flame resistance and most importantly by substantially maintaining the strength such that it may be used for heavy applications in almost the same manner as an unfilled POM-material.

In a further advantageous embodiment the conductive agent is selected from carbon based materials, and in particular carbon black, where the surface resistance is between 10³ and 10⁷ Ohm.

By selecting a carbon based material and in particular carbon black a number of advantages is achieved. Firstly, the carbon blacks provide electrical conductivity to the plastic compound, but it also provides lasting protection against ultraviolet light which would otherwise degrade the plastic over time. Carbon blacks are moderately low cost pigments producing various shades of black in the final product. In order to select the proper carbon black material due care shall be paid to the particle size structure and purity as these are critical elements when filling a polymer with carbon black as a filler. It is therefore important to select a carbon black compound which has excellent dispersion properties in the raw injection moulding material where the carbon black particle size is substantially consistent whereby a generally homogenous distribution of the carbon black material may be achieved in the thermoplastic injection moulding material. Most manufacturers of carbon black compounds advise to add more than 25% by weight of carbon black to a polymer mix in order to obtain surface resistance in the order where the material may be classified as electrically conductive. The present invention, however, has found that in combination with the other additives much less carbon black may be added in order to obtain a sufficient surface resistance such that the material will exhibit consistent electrically conducting properties.

In a still further advantageous embodiment of the invention the flame-retardant is selected from one or more of the following compounds: halogen-containing organic compounds halogen-free phosphoric ester compounds, bromine-containing organic compound, halogen-free phosphazene compound.

As all these materials will achieve flame-retardance in the finished polymer matrix and they all have distinctive advantages and disadvantages, the skilled person will know how to select the appropriate flame-retardant material from any of these according to the application. It should, however, be noted that a preferred material is a halogenated RoHS compliant (FR system). With materials falling under this generic compound classification fire-retardant properties relating to UL94 classification V1 or better is achieved.

Flame retardance is an important feature in that POM burns without being easily visible, which may lead to situations where a substantial fire hazard occurs before it is detected and action is taken.

In a still further advantageous embodiment of the invention the impact modifier is selected among PE or TPE as these materials readily blend with the polymer matrix and are known to have an improved effect on the impact resistance of the objects moulded from a thermoplastic injection moulding material.

A problem often addressed in the literature is the fact that, as a POM object containing for example carbon black, in order to render it electrically conductive, burns, the carbon black will ignite and drip from the burning object and thereby be a potential cause of widespread fire injury and the like. However, by adding other additives or even the impact improving materials PE or TPE the dripping problem is minimized providing added advantages.

In a still further advantageous embodiment of the invention the other additives are selected among known injection moulding supporting compounds for better release from moulds, improved mixing of the polymer matrix, polymer stabilizing compounds, colour pigments and the like.

The invention is also directed towards an injection moulded thermoplastic object, being a modular belt link suitable to be assembled with other substantially identical modular belt links to form an endless belt, wherein the modular belt link is moulded from a thermoplastic injection moulding material as decribed above where said modular belt link has a density between 1.3 to 1.5 g/cm³, a tensile strength between 67 and 75 MPa, a tensile modulus between 3100 to 3400 MPa and a surface impact strength according to Izod Notch of 6 kJ/m2, and a flame resistance according to UL94 of V1.

### Examples

### Example 1

A batch containing:
66 % by weight (5.5 kg) of polyamide selected from BASF Ultramid
12 % by weight (1 kg) conductive agent (conductive carbon black supplied by Ampacet)
12 % by weight (1 kg) flame retardant (Armoquell FR930 supplied by Akzo Nobel Polymer)
9 % by weight (0.75 kg) impact modifier (N410 supplied by Ningbo Nengzhiguang New Materials Technology Co., Ltd)
1 % by weight (0.1 kg) further additive of mould release lubricant (LMR® Lecithin mold release agent No. 43512N supplied by Slide Products Inc)
was mixed and introduced into a standard injection moulding machine. The moulds were for modular belt links (RTB by Ammeraal).

The resulting belt modules had a:

| | |
|---|---|
| Density of | 1.34 g/cm3 |
| Tensile strength | 70 MPa |
| Tensile modulus | 3250 MPa |
| Izod Notch | 6 kJ/m2 |
| UL94 | V0 (at 3.2 mm - average extinguishing 3 secs/specimen) |
| Electric conductivity | 5 ^{∗} 10⁶ S ^{∗} m⁻¹ |

### Example 2

A batch containing:
82 % by weight (12.3 kg) of polyamide selected from BASF Ultramid
5 % by weight (0.75 kg) conductive agent (conductive carbon black supplied by Ampacet)
8 % by weight (1.2 kg) flame retardant (Armoquell FR930 supplied by Akzo Nobel Polymer)
4 % by weight (0.6 kg) impact modifier (N410 supplied by Ningbo Nengzhiguang New Materials Technology Co., Ltd)
1 % by weight (0.15 kg) further additive of mould release lubricant (LMR® Lecithin mold release agent No. 43512N supplied by Slide Products Inc)
was mixed and introduced in to a standard injection moulding machine. The moulds were for modular belt links (RTB by Ammeraal).

The resulting belt modules had a:

| | |
|---|---|
| Density of | 1.37 g/cm3 |
| Tensile strength | 78 MPa |
| Tensile modulus | 3290 MPa |
| Izod Notch | 6 kJ/m2 |
| UL94 | V1 (at 3.2 mm - average extinguishing 3 secs/specimen) |
| Electric conductivity | 2 ^{∗} 10⁷ S ^{∗} m⁻¹ |

## Claims

1. Thermoplastic injection moulding material, which material is electrically conductive, fire-retardant and having a high tensile strength, **characterised in that** the material consists of:
- 45 to 85 % by weight of Polyamide 6:
- 5% to 25% by weight of a conductive agent;
- 5% to 25% by weight of a flame retardant;
- 3% to 15% by weight of an impact modifier
- 0% to 4% by weight of other additives

2. Thermoplastic injection moulding material according to claim 1 wherein the conductive agent is selected from carbon based materials, where the surface resistance is between 10³ and 10⁷ Ohm.

3. Thermoplastic injection moulding material according to claim 2 where the carbon based material is carbon black.

4. Thermoplastic injection moulding material according to claim 1 wherein the flame retardant is selected from one or more of the following compounds: halogen-containing organic compounds halogen-free phosphoric ester compounds, bromine-containing organic compound, halogen-free phosphazene compound.

5. Thermoplastic injection moulding material according to claim 1 wherein the impact modifier is selected among PE or TPE.

6. Thermoplastic injection moulding material according to claim 1 wherein the other additives are selected among known injection moulding supporting compounds for better release from moulds, improved mixing of the polymer matrix, polymer stabilizing compounds, colour pigments.

7. Injection moulded thermoplastic object, being a modular belt link suitable to be assembled with other substantially identical modular belt links to form an endless belt, wherein the modular belt link is moulded from a thermoplastic injection moulding material according to any of claims 1 to 6 where said modular belt link has a density between 1.3 to 1.5 g/cm3, a tensile strength between 67 and 75 MPa, a tensile modulus between 3100 to 3400 MPa and a surface impact strength according to Izod Notch of 6 kJ/m2, and a flame resistance according to UL94 of V1.

## Patentansprüche

1. Thermoplastisches Spritzgussmaterial, wobei das Material elektrisch leitend und flammhemmend ist und eine hohe Zugfestigkeit aufweist, **dadurch gekennzeichnet, dass** das Material aus Folgendem besteht:
- 45 bis 85 Gew.-% Polyamid 6;
- 5 Gew.-% bis 25 Gew.-% eines leitfähigen Mittels;
- 5 Gew.-% bis 25 Gew.-% eines Flammschutzmittels;
- 3 Gew.-% bis 15 Gew.-% eines Schlagzähmodifizierers;
- 0 Gew.-% bis 4 Gew.-% anderer Zusatzstoffe.

2. Thermoplastisches Spritzgussmaterial nach Anspruch 1, wobei das leitfähige Mittel aus kohlenstoffbasierten Materialien ausgewählt ist, bei denen der Oberflächenwiderstand zwischen 10³ und 10⁷ Ohm liegt.

3. Thermoplastisches Spritzgussmaterial nach Anspruch 2, wobei das kohlenstoffbasierte Material Ruß ist.

4. Thermoplastisches Spritzgussmaterial nach Anspruch 1, wobei das Flammschutzmittel aus einem oder mehreren der Folgenden Verbindungen ausgewählt ist: halogenhaltigen organischen Verbindungen, halogenfreien Phosphor-Ester-Verbindungen, einer bromhaltigen organischen Verbindung, einer halogenfreien Phosphazenverbindung.

5. Thermoplastisches Spritzgussmaterial nach Anspruch 1, wobei der Schlagzähmodifizierer aus PE oder TPE ausgewählt ist.

6. Thermoplastisches Spritzgussmaterial nach Anspruch 1, wobei die anderen Zusatzstoffe aus bekannten spritzgussunterstützenden Verbindungen für ein besseres Lösen aus Gussformen, verbessertes Mischen der Polymermatrix, Polymerstabilisierungsverbindungen und Farbpigmente ausgewählt ist.

7. Spritzgussgeformtes thermoplastisches Objekt, bei dem es sich um eine modulare Riemenverbindung handelt, die geeignet ist, um mit anderen im Wesentlichen identischen modularen Riemenverbindungen zusammengebaut zu werden, um einen Endlosriemen zu bilden, wobei die modulare Riemenverbindung aus einem thermoplastischen Spritzgussmaterial nach einem der Ansprüche 1 bis 6 geformt ist, wobei die modulare Riemenverbindung eine Dichte zwischen 1,3 und 1,5 g/cm3, eine Zugfestigkeit zwischen 67 und 75 MPa, ein Zugmodul zwischen 3.100 und 3.400 MPa und eine Oberflächenschlagzähigkeit gemäß Izod Notch von 6 kJ/m2 sowie eine Flammbeständigkeit gemäß UL94 von V1 aufweist.

## Revendications

1. Matériau de moulage par injection thermoplastique, lequel matériau est électriquement conducteur, ignifuge et ayant une résistance à la traction élevée, **caractérisé en ce que** le matériau comprend :
- 45 à 85 % en poids de polyamide 6 ;
- 5 % à 25 % en poids d'un agent conducteur ;
- 5 % à 25 % en poids d'un retardateur de flamme ;
- 3 % à 15 % en poids d'un modificateur d'impact ;
- 0 % à 4 % en poids d'autres additifs.

2. Matériau de moulage par injection thermoplastique selon la revendication 1, dans lequel l'agent conducteur est choisi parmi des matériaux à base de carbone, où la résistance de surface est comprise entre 10³ et 10⁷ Ohm.

3. Matériau de moulage par injection thermoplastique selon la revendication 2, où le matériau à base de carbone est du noir de carbone.

4. Matériau de moulage par injection thermoplastique selon la revendication 1, dans lequel le retardateur de flamme est choisi parmi un ou plusieurs des composés suivants : des composés organiques contenant un halogène, des composés d'ester phosphorique sans halogène, un composé organique contenant du brome, un composé phosphazène sans halogène.

5. Matériau de moulage par injection thermoplastique selon la revendication 1, dans lequel le modificateur d'impact est choisi parmi PE ou TPE.

6. Matériau de moulage par injection thermoplastique selon la revendication 1, dans lequel les autres additifs sont choisis parmi des composés de support de moulage par injection connus pour un meilleur démoulage, un mélange amélioré de la matrice polymère, des composés de stabilisation polymères, des pigments colorés.

7. Objet thermoplastique moulé par injection, étant un maillon de courroie modulaire conçu pour être assemblé avec d'autres maillons de courroie modulaires sensiblement identiques pour former une courroie sans fin, dans lequel le maillon de courroie modulaire est moulé à partir d'un matériau de moulage par injection thermoplastique selon l'une quelconque des revendications 1 à 6, où ledit maillon de courroie modulaire a une densité comprise entre 1,3 et 1,5 g/cm3, une résistance à la traction comprise entre 67 et 75 MPa, un module de traction compris entre 3 100 et 3 400 MPa et une résistance d'impact de surface selon l'entaille Izod de 6 kJ/m2 et une résistance au feu selon UL94 de V1.
